# FASCICULE DE BREVET EUROPEEN

(11) **EP 0 709 254 B1**
(45) Date de publication et mention de la délivrance du brevet: **14.01.1998**
(21) Numéro de dépôt: 95402332.1
(22) Date de dépôt: 19.10.1995
(51) Int. Cl.: B60R 16/02

(54) **Système de communication d'informations par courants porteurs, notamment pour un véhicule automobile**
Elektronisches Informationsübertragungssystem auf stromführenden Leitungen, insbesonders für ein Kraftfahrzeug
Data communications system using carrier currents, in particular for a vehicle

(30) Priorité: 26.10.1994 FR 9412831
(43) Date de publication de la demande: 01.05.1996
(73) Titulaire: AUTOMOBILES PEUGEOT, 75116 Paris (FR); AUTOMOBILES CITROEN, 92200 Neuilly-sur-Seine (FR)
(72) Inventeur: Malville, Joel, F-60230 Chambly (FR)
(74) Mandataire: Polus, Camille

(56) Documents cités:
- EP-A- 0 393 233
- EP-A- 0 454 534
- DE-A- 2 936 929
- US-A- 4 463 341
- US-A- 5 309 436

## Description

La présente invention concerne un système de ommunication d'informations, par courants porteurs, notamment pour un véhicule automobile, comme connu de EP-A-0 454 534.

L'invention concerne plus particulièrement un système de communication d'informations par courants porteurs du type comportant une source d'alimentation en énergie électrique, à laquelle sont reliés des conducteurs d'alimentation formant un réseau de communication d'informations et auxquels sont connectés des organes fonctionnels du véhicule dont au moins certains sont adaptés pour communiquer entre eux.

Il existe déjà dans l'état de la technique des communication d'informations de ce type.

En effet, il est connu dans des véhicules automobiles, de faire communiquer entre eux des organes fonctionnels par l'intermédiaire de conducteurs d'alimentation reliés à la batterie du véhicule en utilisant la technique des courants porteurs.

A titre d'exemple, ces organes fonctionnels peuvent être des dispositifs de contrôle du moteur, des capteurs, des dispositifs de signalisation et d'éclairage, des systèmes antivol ou des systèmes de reproduction sonore.

Cependant, ces systèmes présentent un certain nombre d'inconvénients car ils nécessitent que les organes fonctionnels connectés au réseau soient alimentés en permanence en énergie électrique, même s'ils ne sont pas utilisés, afin de pouvoir recevoir des informations du réseau et éventuellement être mis en fonctionnement.

Dans certains cas, par exemple, lors de l'arrêt du véhicule, moteur coupé, le système de communication d'informations reste en fonctionnement afin de gérer certaines fonctions particulières, comme la condamnation des ouvertures du véhicule et la gestion de l'alarme antivol, qui restent utiles même dans ce mode particulier de fonctionnement du véhicule.

Dans ces conditions, d'autres organes fonctionnels, tels que les dispositifs de pilotage du moteur restent également connectés au réseau d'alimentation et alimentés, en raison de la conception du réseau et des organes fonctionnels, alors qu'ils ne sont pas utilisés.

Chaque organe fonctionnel, qu'il soit utilisé ou non, consomme donc de l'énergie électrique provenant de la batterie du véhicule.

Ainsi, la mise en oeuvre de systèmes de communication d'informations utilisant la technique des courants porteurs de ce type, conduit à une consommation totale d'énergie électrique élevée et à une diminution rapide de la charge de la batterie, même si la quantité d'informations véhiculées par le réseau est très faible, voire nulle.

Le but de l'invention est donc de résoudre ce problème et en particulier de proposer un système de communication d'informations utilisant la technique des courants porteurs qui engendre une faible consommation d'énergie électrique.

A cet effet, l'invention a pour objet un système de communication d'informations par courants porteurs, notamment pour un véhicule automobile, du type comportant une source d'alimentation en énergie électrique à laquelle sont reliés des conducteurs d'alimentation formant un réseau de communication d'informations et auxquels sont connectés des organes fonctionnels du véhicule dont au moins certains sont adaptés pour communiquer entre eux, caractérisé en ce qu'au moins certains des organes fonctionnels comportent une interface de communication et un équipement applicatif associé communiquant avec d'autres organes fonctionnels par l'intermédiaire de son interface de communication, l'interface de communication comportant des moyens de test de la validation d'au moins un critère prédéterminé et des moyens de commande de moyens de pilotage de l'alimentation de l'équipement applicatif associé pour commander en fonction de la validation dudit critère prédéterminé l'alimentation ou non depuis les conducteurs d'alimentation de l'équipement applicatif associé.

Suivant des modes particuliers de réalisation, l'invention peut présenter une ou plusieurs des caractéristiques suivantes :
- les moyens de pilotage de l'alimentation de l'équipement applicatif sont intégrés dans celui-ci et reçoivent en entrée des informations de commande depuis les moyens de commande prévus dans l'interface de communication, par une ligne de commande, afin d'alimenter ou non en sortie à partir des conducteurs d'alimentation, l'équipement applicatif associé,
- les moyens de pilotage de l'alimentation de l'équipement applicatif sont intégrés dans l'interface de communication et reçoivent en entrée des informations de commande depuis les moyens de commande afin d'alimenter ou non en sortie à partir des conducteurs d'alimentation, l'équipement applicatif associé, par une ligne de puissance,
- l'interface de communication comporte des moyens de gestion de protocole et des moyens de pilotage de l'alimentation desdits moyens de gestion de protocole, commandés par lesdits moyens de commande en fonction de la validation dudit critère prédéterminé pour alimenter ou non lesdits moyens de gestion de protocole,
- les moyens de test de la validation du critère prédéterminé comportent des moyens de détection d'informations prédéterminées de validation du critère émises sur le réseau par au moins un organe fonctionnel,
- les informations prédéterminées sont formées par au moins un signal de fréquence porteuse prédéterminée,
- certains organes fonctionnels comportent des moyens pour émettre sur le réseau au moins un signal de fréquence porteuse prédéterminée,
- les informations prédéterminées sont formées par au moins une trame de données prédéterminées,
- certains organes fonctionnels comportent des moyens pour émettre sur le réseau au moins une trame de données prédéterminées,
- les moyens de test de la validation du critère prédéterminé comportent des moyens d'analyse du taux d'activité du réseau de communication.

L'invention sera mieux comprise à la lecture de la description qui va suivre, donnée uniquement à titre d'exemple et faite en se référant aux dessins annexés, sur lesquels :
- la Fig.1 est un schéma synoptique d'un système de communication d'informations selon l'invention:
- les Fig.2 et 3 sont des schémas synoptiques de deux modes de réalisation d'organes fonctionnels d'un système de communication selon l'invention;
- les Fig.4 et 5 sont des schémas synoptiques des interfaces de communication des organes fonctionnels des figures 2 et 3 respectivement; et
- les Fig.6, 7 et 8 sont des schémas synoptiques d'organes fonctionnels d'un système de communication selon l'invention, et comportant des moyens pour émettre des informations sur le réseau.

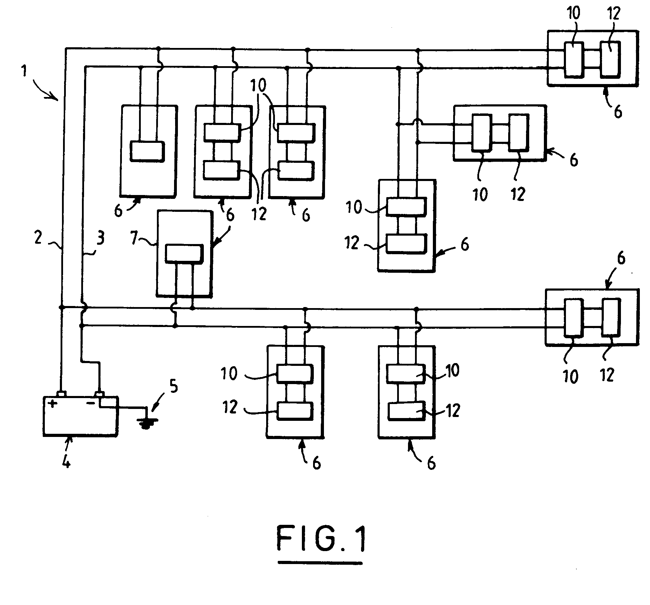

Comme on le voit sur la figure 1, un système de communication d'informations selon l'invention comporte un réseau de communication 1 formé de conducteurs d'alimentation 2,3 reliés à une source d'alimentation en énergie électrique 4 formée par exemple par une batterie d'un véhicule automobile.

De manière classique, l'un des conducteurs d'alimentation 2 est relié à la borne positive de la batterie 4 alors que l'autre conducteur 3 est relié à la borne négative. Cette dernière est également reliée à la structure métallique du véhicule schématisée en 5.

Des organes fonctionnels, désignés chacun par la référence générale 6 sont connectés aux conducteurs d'alimentation 2,3 afin d'une part d'être alimentés en énergie électrique à partir de la batterie 4, et d'autre part, pour ceux qui sont adaptés pour communiquer, d'émettre des informations sur le réseau 1 formé par les conducteurs 2,3, ou d'en recevoir. Les informations circulant sur le réseau sont multiplexées.

Ces organes fonctionnels 6 peuvent être par exemple des dispositifs de contrôle ou de pilotage du moteur, des capteurs, des dispositifs de signalisation et d'éclairage, des systèmes antivol, des systèmes de reproduction sonore, ou encore une unité centrale de gestion du réseau, schématisée en 7 sur la figure 1.

Selon l'invention, certains des organes fonctionnels 6 connectés au réseau comportent une interface de communication 10 associée à un équipement applicatif 12.

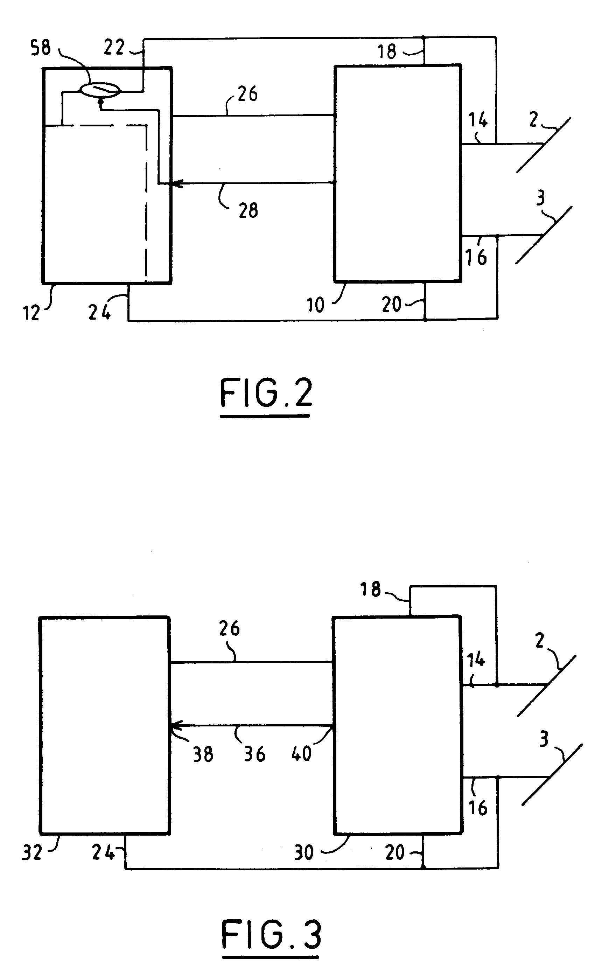

Sur les figures 2 et 3, ont été représentés des schémas synoptiques d'organes fonctionnels adaptés pour être mis en oeuvre dans un système de communication d'informations selon l'invention.

L'organe fonctionnel représenté sur la figure 2 comporte une interface de communication 10 et un équipement applicatif 12. Des entrées d'informations 14,16 de l'interface de communication 10 sont reliées aux conducteurs d'alimentation 2, 3 afin d'émettre des informations sur le réseau ou d'en recevoir.

De plus, des entrées de puissance 18,20 de l'interface de communication 10 sont reliées aux conducteurs d'alimentation 2,3. De même, l'équipement applicatif 12 est relié aux conducteurs 2,3 par l'intermédiaire d'entrées de puissance 22,24.

L'équipement applicatif 12 est relié à l'interface de communication 10 par une première ligne de communication de données 26. Cette ligne de communication de données peut prendre la forme de tout médium de communication connu de l'état de la technique, par exemple une paire de fils torsadés, un câble coaxial, une fibre optique ou des pistes d'un circuit imprimé.

L'équipement applicatif 12 et l'interface de communication 10 sont reliés en outre par une seconde ligne de communication 28 appelée ligne de commande.

Sur la figure 3, est représenté un second mode de réalisation d'un organe fonctionnel d'un système de communication selon l'invention.

L'agencement de cet organe fonctionnel est analogue à celui de la figure 2, bien que l'interface de communication 30 et l'équipement applicatif 32 soient différents de ceux de la figure 2.

En particulier, l'équipement applicatif 30 ne comporte pas d'entrée de puissance analogue à l'entrée de puissance 22 reliée directement à un conducteur d'alimentation, et la ligne de commande 28 est supprimée.

Par contre, une ligne de puissance 36 relie une entrée de puissance 38 de l'équipement applicatif 32 à une sortie d'alimentation 40 de l'interface de communication 30.

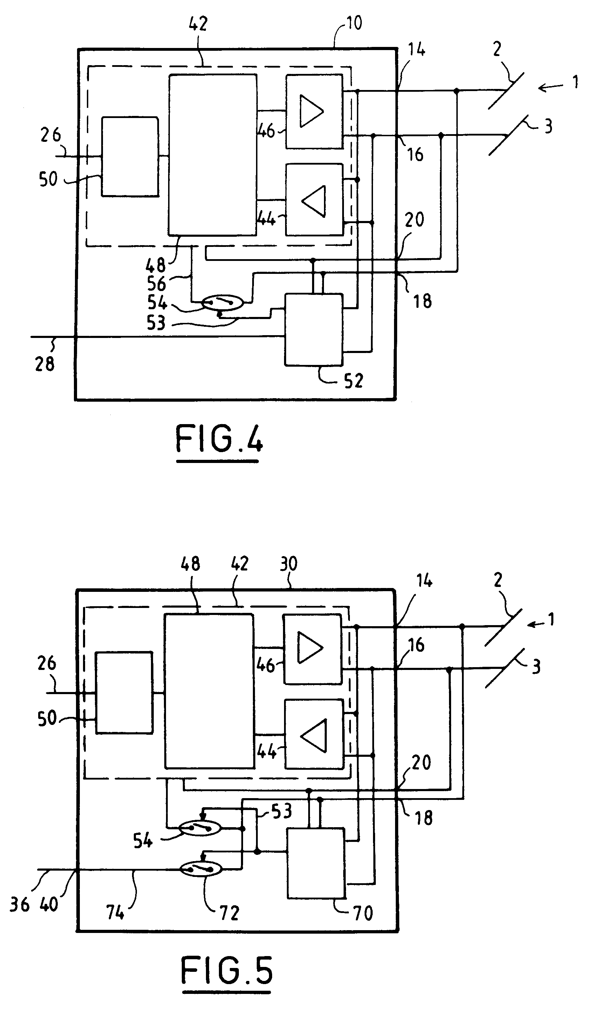

Sur les figures 4 et 5 sont représentées plus en détail les interfaces de communication 10 et 30 respectivement des figures 2 et 3.

Chacune des interfaces de communication comporte, reliée à ses entrées d'informations 14 et 16, une unité de gestion de protocole 42 délimitée par un rectangle en traits pointillés et adaptée pour recevoir et émettre des informations sur le réseau 1 suivant les règles régissant le protocole de ce réseau, et adaptée également pour recevoir et émettre des données sur la ligne de communication de données 26 vers l'équipement applicatif associé suivant les règles régissant le protocole de communication propre à cet équipement applicatif.

Une telle unité de gestion de protocole 42 connue dans l'état de la technique comporte par exemple de manière classique une unité de réception 44 et une unité d'émission 46 reliées en parallèle aux entrées d'informations 14 et 16. Ces unités de réception 44 et d'émission 46 sont reliées respectivement aux entrées et sorties d'une unité de traitement de données 48, adaptée pour effectuer des conversions de protocole, et éventuellement des traitements particuliers de données reçues. Cette unité de traitement 48 est reliée en outre à une unité de communication 50 à laquelle est connectée la ligne de communication 26. Cette unité de communication 50 est adaptée pour émettre et recevoir des données de l'équipement applicatif suivant le protocole propre à ce dernier.

L'interface de communication 10, représentée sur la figure 4, comporte en outre des moyens de commande 52 alimentés de manière classique depuis les entrées de puissance 18 et 20.

Les entrées d'informations de ces moyens de commande 52 sont reliées aux entrées de communication 14 et 16 de l'interface de communication.

Ces moyens de commande 52 comportent des moyens de test de la validation d'un ou plusieurs critères prédéterminés.

Suivant un mode de réalisation de l'invention, ces moyens de test de la validation de critères prédéterminés comportent des moyens de détection d'informations prédéterminées de validation de critères prédéterminés émis sur les conducteurs d'alimentation par au moins un autre organe fonctionnel connecté au réseau 1.

Ces informations prédéterminées de validation des critères prédéterminés peuvent par exemple être au moins une fréquence porteuse modulée ou au moins une fréquence porteuse non modulée.

Ces informations prédéterminées de validation des critères prédéterminés peuvent également être au moins une trame de données.

De tels moyens de détection étant connus de l'état de la technique, ils ne seront pas décrits en détail ici.

Suivant un autre mode de réalisation de l'invention, les moyens de test de la validation de critères prédéterminés des moyens de commande 52 comportent des moyens d'analyse du taux d'activité du réseau de communication, c'est à dire qu'ils sont adaptés par exemple pour déterminer la durée s'écoulant depuis la dernière communication d'informations effectuée sur le réseau.

De tels moyens d'analyse du taux d'activité d'un réseau sont également connus de l'état de la technique, et ne seront pas décrits ici.

Suivant le mode de réalisation de l'interface de communication 10 représentée sur la figure 4, les moyens de commande 52 sont adaptés pour commander par une ligne de commande 53 des moyens de pilotage 54 disposés sur une ligne d'alimentation 56 de l'unité de gestion de protocole 42 reliée à l'entrée de puissance 18. Ces moyens de pilotage 54 sont adaptés pour alimenter ou non sous la commande des moyens de commande 52 l'unité de gestion de protocole 42 et sont par exemple formés par un commutateur commandé connu de l'état de la technique.

Les moyens de commande 52 comportent également des moyens pour engendrer et émettre vers l'équipement applicatif 12, par la ligne de commande 28, des signaux de commande de mise en veille ou de réveil, en fonction de la validation des critères prédéterminés.

L'équipement applicatif 12 représenté sur la figure 2, comporte des moyens de pilotage 58 adaptés pour alimenter ou non en sortie depuis l'entrée de puissance 22, relié au conducteur d'alimentation 2, les constituants de l'équipement applicatif, en fonction de la nature du signal de mise en veille ou de réveil reçu en entrée de la ligne de commande 28, depuis les moyens de commande 52.

Les moyens de pilotage 58 peuvent être formés par un commutateur commandé, les signaux de commande de mise en veille ou de réveil prenant alors la forme d'une simple impulsion de changement d'état du commutateur transmise sur la ligne de commande 28.

Sur la figure 5, l'interface de communication 30, comporte en plus de l'unité de gestion de protocole 42, des moyens de commande 70 alimentés depuis les entrées de puissance 18 et 20 comportant, comme les moyens de commande 52, des moyens de test de la validation de critères prédéterminés, par examen du réseau 1 depuis les entrées d'informations 14 et 16.

Comme dans l'interface de communication représentée sur la figure 4, les moyens de commande 70 sont conçus pour commander des moyens de pilotage 54 adaptés pour en fonction des informations de commande reçues en entrée depuis les moyens de commande 70, alimenter ou non en sortie, l'unité de gestion de protocole 42.

Les moyens de commande 70 sont également, de manière analogue, conçus pour commander des moyens de pilotage de l'alimentation 72 adaptés pour alimenter ou non en sortie, la sortie d'alimentation 40 à laquelle est connectée la ligne de puissance 36 alimentant l'équipement applicatif 32 par son entrée de puissance 38.

Ces moyens de pilotage 72 de l'alimentation sont disposés sur une ligne d'alimentation 74 entre l'entrée de puissance 18 de l'interface de communication 30 et la sortie d'alimentation 40 et sont formés par exemple par un commutateur commandé.

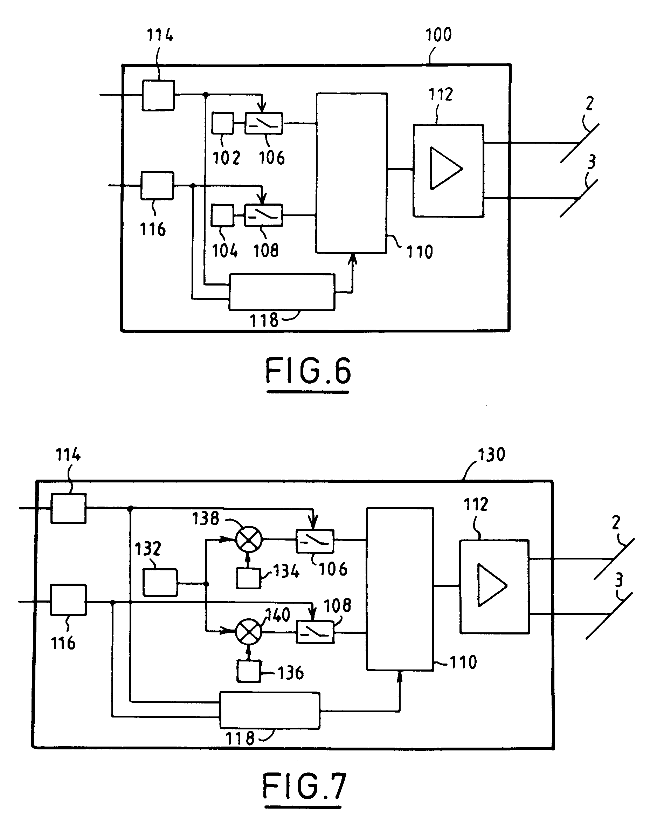

Sur les figures 6,7 et 8, ont été représentés des organes fonctionnels de génération et d'émission d'informations prédéterminées sur les conducteurs d'alimentation 2,3 du réseau 1.

Sur la figure 6, a été représenté un organe fonctionnel d'émission 100 adapté pour émettre de manière sélective deux fréquences porteuses non modulées.

Cet organe d'émission 100 comporte deux générateurs de fréquences porteuses 102,104. Ces deux générateurs de fréquences porteuses différentes 102,104 peuvent être formés par deux oscillateurs ou encore par un oscillateur unique associé à un diviseur de fréquences.

Les sorties des générateurs de fréquences porteuses 102,104 sont reliés par l'intermédiaire de moyens de connexion 106, 108 commandables aux entrées d'un dispositif de temporisation d'émission 110, connu dans l'état de la technique.

La sortie du dispositif de temporisation d'émission 110 est reliée à une unité d'émission 112 connue dans l'état de la technique dont les sorties sont reliées aux conducteurs d'alimentation 2,3 du réseau 1.

Les moyens de connexion commandables 106 et 108 sont commandés par des moyens de détection 114, 116 respectivement de commande du pilotage de l'alimentation de certains équipements applicatifs.

Ces moyens de détection de commande de pilotage 114 et 116 sont adaptés pour recevoir des informations de mise en veille ou de réveil de certains équipements applicatifs du réseau depuis des dispositifs de commande adaptés non représentés. Un exemple d'un tel dispositif de commande adapté peut être un capteur de présence de clé de contact sur le véhicule.

De même, ces moyens de détection de commande de pilotage 114 et 116 sont reliés aux entrées d'un dispositif de contrôle de cohérence 118 connu dans l'état de la technique, et dont la sortie est reliée au dispositif de temporisation d'émission 110.

Sur la figure 7, est représenté un organe fonctionnel d'émission 130 d'une fréquence porteuse modulée suivant deux modulations différentes prédéterminées.

Cet organe d'émission 130 présente de nombreux éléments communs avec l'organe d'émission représenté sur la figure 6. Ces éléments communs agencés de manière analogue, sont désignés par les mêmes numéros de référence.

Cet organe fonctionnel d'émission 130 comporte un générateur de fréquence porteuse 132 ainsi que deux dispositifs de génération de signaux de modulation différents 134,136. Ce générateur de fréquence porteuse 132 et ces dispositifs de génération de signaux de modulation 134, 136 sont reliés respectivement aux entrées de moyens de modulation de la fréquence porteuse par les signaux de modulation portant respectivement les références 138, 140, et dont les sorties respectives sont reliées aux entrées des moyens de connexion commandables 106 et 108.

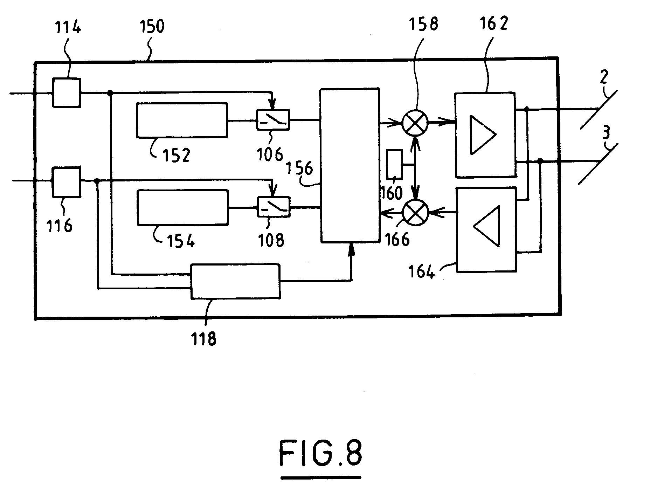

Sur la figure 8, est représenté un organe fonctionnel d'émission 150 de trame de données sous la forme d'un signal modulé. Les éléments communs aux organes fonctionnels 100 et 130 décrits précédemment, sont désignés par les mêmes références.

Dans cet organe fonctionnel, deux mémoires de trames 152, 154 sont reliées aux entrées des moyens de connexion commandables 106, 108. Les sorties des moyens de connexion commandables sont reliées aux entrées d'un dispositif de génération de trame 156 auquel est également connectée la sortie du dispositif 118 de contrôle de cohérence.

La sortie du dispositif de génération de trame 156 est connectée à l'entrée d'un modulateur 158 dont une autre entrée est reliée à un générateur 160 de fréquence porteuse.

La sortie du modulateur 158 est reliée à l'entrée d'une unité d'émission 162 dont les sorties sont reliées aux conducteurs d'alimentation 2 et 3 du réseau 1.

Une unité de réception 164 dont les entrées sont reliées aux conducteurs d'alimentation 2,3 du réseau 1 a sa sortie reliée à l'entrée d'un démodulateur 166 dont une autre entrée est reliée au générateur de fréquence porteuse 160, et dont la sortie est reliée au dispositif de génération de trame 156.

L'agencement réalisé par l'unité de réception et le démodulateur est adapté pour contrôler la conformité de la transmission effectuée par l'unité d'émission 162 sur le réseau 1 et éventuellement piloter le dispositif de génération de trame 156 pour qu'il engendre une nouvelle émission de trame modulée sur le réseau.

Le fonctionnement d'un système de communication d'informations utilisant la technique des courants porteurs selon l'invention tel que décrit précédemment va maintenant être décrit plus en détail.

Lorsque le véhicule automobile, dans lequel le système de communication d'informations est installé, est dans une phase de fonctionnement particulière, dans laquelle tous les équipements applicatifs ne sont pas nécessaires, le système de communication selon l'invention permet de limiter la consommation d'énergie électrique en déconnectant certains des dispositifs des organes fonctionnels correspondants.

Dans un mode particulier de réalisation de l'invention, les moyens de test des moyens de commande 52,70 comportent des moyens d'analyse du taux d'activité du réseau 1 de communication.

Si après une période de temps prédéterminée, aucune communication n'est détectée sur le réseau ce qui constitue la validation d'un critère prédéterminé, les moyens de commande 52,70 commandent les moyens de pilotage 58,72 de l'alimentation de l'équipement applicatif associé, pour couper celle-ci de telle manière que la consommation en énergie électrique de ce dernier soit diminuée.

Dans le mode de réalisation représenté sur les figures 2 et 4, les moyens de commande 52 par l'intermédiaire des moyens de pilotage 54 ouvrent le circuit d'alimentation de l'unité de gestion de protocole 42, et engendrent un signal de commande de mise en veille qu'ils transmettent via la ligne de commande 28 vers l'équipement applicatif 12.

Ce dernier par l'intermédiaire des moyens de pilotage 58 de l'alimentation de ses constituants ouvre le circuit d'alimentation de ceux-ci afin de réduire la consommation globale de l'organe fonctionnel.

L'unité de gestion de protocole 42 et l'équipement applicatif 12 étant déconnectés de la source d'alimentation en énergie électrique 4, la consommation globale du système de communication est réduite.

Lorsque de nouvelles communications sont détectées par les moyens d'analyse du taux d'activité du réseau ce qui constitue également la validation d'un critère prédéterminé, les moyens de commande 52 commandent, en émettant un signal de commande de réveil, les moyens de pilotage 54 et 58 pour rétablir l'alimentation de l'unité de gestion de protocole 42 et de l'équipement applicatif 12. Ainsi, l'organe fonctionnel peut à nouveau être utilisé, et recevoir ou émettre des données via le réseau 1.

Dans le mode de réalisation représenté sur les figures 3 et 5, suite à la détection d'une absence d'activité sur le réseau 1, les moyens de commande 70 commandent les moyens de pilotage 54 et 72 afin de provoquer l'ouverture du circuit d'alimentation de l'unité de gestion de protocole 42 et de l'organe applicatif 32 correspondant.

Dans ce cas, les moyens de pilotage 72 de l'alimentation de l'équipement applicatif 32 sont disposés sur la ligne d'alimentation 74 alimentant la sortie d'alimentation 40 à laquelle est connectée l'équipement applicatif 32 par la ligne de puissance 36.

Suivant un autre mode de réalisation, les moyens de test des moyens de commande 52 et 70 comportent des moyens de détection d'informations prédéterminées de validation de critères prédéterminés émises sur les conducteurs d'alimentation par au moins un organe fonctionnel, tels que ceux schématisés sur les figures 6 à 8.

En effet, lorsque le véhicule est dans une phase de fonctionnement permettant la déconnexion de certains équipements applicatifs, un dispositif de commande de pilotage de l'alimentation (non représenté) de certains équipements applicatifs engendre et transmet vers les moyens de détection de commande de pilotage 114, un signal de mise en veille conduisant à la génération sur le réseau, d'informations prédéterminées que les moyens de test de validation de critères prédéterminés sont adaptés pour évaluer.

Par exemple, ce dispositif de commande de pilotage de l'alimentation de certains équipements applicatifs peut être un détecteur de clé de contact ou un détecteur de présence humaine dans l'habitacle du véhicule.

Suivant le mode de réalisation de l'organe fonctionnel d'émission, cette information peut prendre la forme d'une fréquence porteuse non modulée (figure 6), d'une fréquence porteuse modulée (figure 7) ou d'une trame de données sous la forme d'un signal modulé (figure 8).

Les moyens de commande 52 et 70, en fonction de la reconnaissance d'informations prédéterminées sur le réseau par les moyens de test, commandent comme cela a été expliqué précédemment, les moyens de pilotage de l'alimentation des équipements applicatifs et des unités de gestion de protocole associés.

L'organe fonctionnel d'émission 100 représenté sur la figure 6, en réponse à une commande de pilotage reçue par les moyens de détection de commande de pilotage 114 engendre une première fréquence porteuse non modulée f1 correspondant par exemple à la coupure de l'alimentation de certains équipements applicatifs du système de communication.

Pour se faire, les moyens de détection de commande de pilotage 114 commandent les moyens de connexion 106 afin que la fréquence porteuse engendrée par le générateur de fréquence porteuse 102 soit acheminée vers le dispositif de temporisation d'émission 110.

Si le dispositif de contrôle de cohérence 118 ne détecte pas d'incohérence entre les signaux reçus par les moyens de détection de commande de pilotage 114 et 116, celui-ci commande le dispositif de temporisation d'émission 110 pour permettre par l'intermédiaire de l'unité d'émission 112, la transmission sur le réseau pendant une période de temps prédéterminée de la fréquence porteuse f1.

De même, lorsque les moyens de détection de commande de pilotage 116 reçoivent une commande de pilotage correspondant à un signal de réveil depuis le dispositif de commande de pilotage non représenté, l'organe fonctionnel 100 émet sur le réseau une deuxième fréquence porteuse f2 différente de la première, engendrée par le générateur de fréquence porteuse 104.

Cette seconde fréquence porteuse f2 est adaptée pour permettre le rétablissement de l'alimentation des équipements applicatifs par leurs moyens respectifs de pilotage d'alimentation.

Dans le cas où le dispositif de contrôle de cohérence 118 détecterait une incohérence entre les commandes reçues par les moyens de détection de commande de pilotage 114, 116, celui-ci pourrait être amené à interdire toute émission par le dispositif de temporisation d'émission 110 ou, au contraire permettre l'émission de la fréquence porteuse f2 correspondant au rétablissement de l'alimentation des équipements applicatifs.

L'organe fonctionnel d'émission 130, représenté sur la figure 7 est adapté pour engendrer de manière sélective en réponse à une commande spécifique de pilotage détectée par les moyens de détection de commande de pilotage 114 ou 116, une fréquence porteuse modulée, dont la modulation spécifique est définie par le générateur de signal de modulation 134 ou 136.

Dans le cas de l'organe fonctionnel d'émission représenté sur la figure 8, la réception d'une commande de pilotage sur l'un ou l'autre des moyens de détection de commande de pilotage 114, 116 provoque la connexion d'une des mémoires de trame 152 ou 154 avec le dispositif de génération de trame 156.

Dans la mesure où le dispositif de contrôle de cohérence 118 ne détecte pas d'incohérence, le dispositif de génération de trame 156 engendre une trame de données dont le champ de données est stocké dans la mémoire de trame avec laquelle il est connecté. Cette trame de données est acheminée vers le modulateur 158 qui, grâce à la fréquence porteuse engendrée par le générateur de fréquence porteuse 160 engendre vers l'entrée de l'unité d'émission 162, une fréquence porteuse modulée dont la modulation est représentative des informations contenues dans le champ de données de la trame engendrée par le dispositif de génération de trame 156.

L'unité d'émission 162 de manière classique émet sur le réseau 1 la fréquence porteuse modulée.

Le générateur de trame 156 contrôle la conformité de la transmission effectuée par l'unité d'émission 162 par vérification des données reçues du démodulateur 166, lequel reçoit un signal modulé de l'unité de réception 164 scrutant le réseau.

On pourrait concevoir que la trame de données numériques soit directement émise sur le réseau vers les autres organes fonctionnels.

Cependant, la transposition en fréquences telle que réalisée par le dispositif schématisé sur la figure 8, est rendue nécessaire pour respecter les contraintes imposées par les normes de compatibilité électromagnétique actuellement en vigueur dans le domaine de la construction de véhicules automobiles.

De manière générale, on conçoit qu'un système de communication d'informations tel que celui décrit dans la présente demande, permet la réduction de la consommation globale du système de communication par coupure sélective de l'alimentation des équipements applicatifs de certains organes fonctionnels du système de communication lorsque ces derniers ne sont pas utilisés.

Dans ce cas, la consommation de chacun des organes fonctionnels dont l'équipement applicatif est déconnecté, est réduite à la simple consommation des moyens de commande puisque l'unité de gestion de protocole peut elle aussi être déconnectée du réseau d'alimentation.

## Revendications

1. Système de communication d'informations par courants porteurs, notamment pour un véhicule automobile, du type comportant une source d'alimentation en énergie électrique, à laquelle sont reliés des conducteurs d'alimentation (2,3) formant un réseau (1) de communication d'informations et auxquels sont connectés des organes fonctionnels (6) du véhicule dont au moins certains sont adaptés pour communiquer entre eux, caractérisé en ce qu'au moins certains des organes fonctionnels (6) comportent une interface de communication (10;30) et un équipement applicatif (12,32) associé communiquant avec d'autres organes fonctionnels (6) par l'intermédiaire de son interface de communication (10;30), l'interface de communication (10;30) comportant des moyens de test de la validation d'au moins un critère prédéterminé et des moyens de commande (52;70) de moyens de pilotage (58;72) de l'alimentation de l'équipement applicatif (12;32) associé, pour commander en fonction de la validation dudit critère prédéterminé l'alimentation ou non depuis les conducteurs d'alimentation (2, 3), de l'équipement applicatif (12;32) associé.

2. Système de communication selon la revendication 2, caractérisé en ce que les moyens de pilotage (58) de l'alimentation de l'équipement applicatif (12) sont intégrés dans celui-ci et reçoivent en entrée des informations de commande depuis les moyens de commande (52) prévus dans l'interface de communication (10), par une ligne de commande (28), afin d'alimenter ou non en sortie à partir des conducteurs d'alimentation (2,3), l'équipement applicatif (12) associé.

3. Système de communication selon la revendication 1, caractérisé en ce que les moyens de pilotage (72) de l'alimentation de l'équipement applicatif (32) sont intégrés dans l'interface de communication (30) et reçoivent en entrée des informations de commande depuis les moyens de commande (70) afin d'alimenter ou non en sortie à partir des conducteurs d'alimentation (2,3), l'équipement applicatif (12) associé, par une ligne de puissance (36).

4. Système de communication selon l'une quelconque des revendications précédentes, caractérisé en ce que l'interface de communication (10;30) comporte des moyens de gestion de protocole (42) et des moyens de pilotage (54) de l'alimentation desdits moyens de gestion de protocole (42), commandés par lesdits moyens de commande (52;70) en fonction de la validation dudit critère prédéterminé pour alimenter ou non lesdits moyens de gestion de protocole (42).

5. Système de communication selon l'une quelconque des revendications précédentes, caractérisé en ce que les moyens de test de la validation du critère prédéterminé comportent des moyens de détection d'informations prédéterminées de validation du critère émises sur le réseau par au moins un organe fonctionnel (100;130;150).

6. système de communication selon la revendication 5, caractérisé en ce que les informations prédéterminées sont formées par au moins un signal de fréquence porteuse prédéterminée.

7. Système de communication selon la revendication 6, caractérisé en ce que certains organes fonctionnels (100;130) comportent des moyens pour émettre sur le réseau (1) au moins un signal de fréquence porteuse prédéterminée.

8. Système de communication selon la revendication 5, caractérisé en ce que les informations prédéterminées sont formées par au moins une trame de données prédéterminées.

9. Système de communication selon la revendication 8, caractérisé en ce que certains organes fonctionnels (150) comportent des moyens pour émettre sur le réseau (1) au moins une trame de données prédéterminées.

10. Système de communication selon l'une quelconque des revendications 1 à 4, caractérisé en ce que les moyens de test de la validation du critère prédéterminé comportent des moyens d'analyse du taux d'activité du réseau (1) de communication.

## Claims

1. Data communication system using carrier currents, in particular for a motor vehicle, of the type comprising a source for supplying electric energy, to which are connected supply conductors (2, 3) forming a network (1) for communicating data and to which are connected functional members (6) of the vehicle of which at least certain ones are adapted for communication between one another, characterised in that at least certain of the functional members (6) comprise a communication interface (10; 30) and an associated item of operative equipment (12, 32) communicating with other functional members (6) through the intermediary of its communication interface (10; 30), the communication interface (10; 30) comprising means for testing the validity of at least one predetermined criterion and command means (52; 70) for control means (58; 72) for the supply of the associated operative equipment (12; 32), to control as a function of the validation of the said predetermined criterion the descision to supply or not to supply from the supply conductors (2, 3) the associated item of operative equipment (12; 32).

2. Communication system according to claim 2, characterised in that the control means (58) for the supply of the item of operative equipment (12) are integrated into the latter and receive at the input the command data from the command means (52) provided in the communication interface (10), through a command line (28), with the aim of supplying or not supplying from the outlet of the supply conductors (2, 3) the associated item of operative equipment (12).

3. Communication system according to claim 1, characterised in that the control means (72) for the supply of the item of operative equipment (32) are integrated into the communication interface (30) and receive at the input the command data from the command means (70) with the aim of supplying or not supplying from the outlet of the supply conductors (2, 3) the associated item of operative equipment (12), through a power line (36).

4. Communication system according to any one of the foregoing claims, characterised in that the communication interface (10; 30) comprises protocol management means (42) and control means (54) for the supply of the said protocol management means (42), controlled by the said command means (52; 70) as a function of the validation of the said predetermined criterion for supplying or not supplying the said protocol management means (42).

5. Communication system according to any one of the foregoing claims, characterised in that the means for testing the validity of the predetermined criterion comprise means for detecting predetermined validation data of the criterion delivered to the network by at least one functional member (100; 130; 150).

6. Communication system according to claim 5, characterised in that the predetermined data are formed by at least one signal of predetermined carrier frequency.

7. Communication system according to claim 6, characterised in that certain functional members (100; 130) comprise means for delivering to the network (1) at least one signal of predetermined carrier frequency.

8. Communication system according to claim 5, characterised in that the predetermined data are formed by at least one item of predetermined data.

9. Communication system according to claim 8, characterised in that certain functional members (150) comprise means for delivering to the network (1) at least one item of predetermined data.

10. Communication system according to any one of claims 1 to 4, characterised in that the means for testing the validity of the predetermined criterion comprise means for analysing the rates of activity of the communication network (1).

## Patentansprüche

1. System zur Datenübertragung mittels Trägerströmen, insbesondere für ein Automobil, mit einer elektrischen Energieversorgungsquelle, an der Versorgungsleitungen (2, 3) angeschlossen sind, welche ein Datenübertragungsnetzwerk (1) bilden und mit Funktionsorganen (6) des Fahrzeugs verbunden sind, von denen wenigstens einige zu einer gegenseitigen Datenübertragung ausgebildet sind, dadurch gekennzeichnet, daß wenigstens einige der Funktionsorgane (6) jeweils eine Datenübertragungsschnittstelle (10; 30) und ein zugeordnetes Anwendungsgerät (12, 32) aufweisen, das über seine Datenübertragungsschnittstelle (10; 30) mit anderen Funktionsorganen (6) Daten austauschen kann, wobei die Datenübertragungsschnittstelle (10; 30) eine Einrichtung zum Prüfen der Erfüllung wenigstens eines vorgegebenen Kriteriums und eine Steuereinrichtung (52; 70) für ein Stellglied (58; 72) der Stromversorgung des zugeordneten Anwendungsgeräts (12; 32) aufweist, um in Abhängigkeit von der Erfüllung des vorgegebenen Kriteriums zu veranlassen, daß das zugeordnete Anwendungsgerät (12; 32) aus den Versorgungsleitungen (2, 3) versorgt wird oder nicht.

2. Datenübertragungssystem nach Anspruch 1, dadurch gekennzeichnet, daß das Stellglied (58) für die Stromversorgung des Anwendungsgeräts (12) im Anwendungsgerät (12) eingebaut ist und als Eingangssignal Steuerdaten aus der in der Datenübertragungsschnittstelle (10) angeordneten Steuereinrichtung (52) über eine Steuerleitung (28) empfängt, um das zugeordnete Anwendungsgerät (12) aus den Versorgungsleitungen (2, 3) über den Stellgliedausgang zu versorgen oder nicht.

3. Datenübertragungssystem nach Anspruch 1, dadurch gekennzeichnet, daß das Stellglied (72) für die Stromversorgung des Anwendungsgeräts (32) in der Datenübertragungsschnittstelle (30) eingebaut ist und als Eingangssignal Steuerdaten aus der Steuereinrichtung (70) empfängt, um das zugeordnete Anwendungsgerät (12) aus den Versorgungsleitungen (2, 3) über den Stellgliedausgang und eine Gerätestromleitung (36) zu versorgen oder nicht.

4. Datenübertragungssystem nach einem der vorangehenden Ansprüche, dadurch gekennzeichnet, daß die Datenübertragungsschnittstelle (10; 30) eine Protokollsteuerungseinrichtung (42) und ein Stellglied (54) für die Versorgung der Protokollsteuerungseinrichtung (42) aufweist, das durch die Steuereinrichtung (52; 70) in Abhängigkeit von der Erfüllung des vorgegebenen Kriteriums gesteuert wird, um die Protokollsteuerungseinrichtung (42) zu versorgen oder nicht.

5. Datenübertragungssystem nach einem der vorangehenden Ansprüche, dadurch gekennzeichnet, daß die Einrichtung zum Prüfen der Erfüllung des vorgegebenen Kriteriums ferner ausgebildet ist, vorgegebene Daten der Erfüllung des Kriteriums zu erfassen, die von wenigstens einem Funktionsorgan (100; 130; 150) in das Netzwerk gesendet werden.

6. Datenübertragungssystem nach Anspruch 5, dadurch gekennzeichnet, daß die vorgegebenen Daten durch wenigstens ein Signal vorgegebener Trägerfrequenz gebildet sind.

7. Datenübertragungssystem nach Anspruch 6, dadurch gekennzeichnet, daß einige Funktionsorgane (100; 130) eingerichtet sind, wenigstens ein Signal vorgegebener Trägerfrequenz in das Netzwerk (1) zu senden.

8. Datenübertragungssystem nach Anspruch 5, dadurch gekennzeichnet, daß die vorgegebenen Daten durch wenigstens eine Folge vorgegebener Daten gebildet sind.

9. Datenübertragungssystem nach Anspruch 8, dadurch gekennzeichnet, daß einige Funktionsorgane (150) eingerichtet sind, wenigstens eine Folge vorgegebener Daten in das Netzwerk (1) zu senden.

10. Datenübertragungssystem nach einem der Ansprüche 1 bis 4, dadurch gekennzeichnet, daß die Einrichtung zum Prüfen der Erfüllung des vorgegebenen Kriteriums ferner ausgebildet ist, den Aktivitätsgrad des Datenübertragungsnetzwerks (1) zu analysieren.
